# EUROPEAN PATENT APPLICATION

(11) **EP 4 686 033 A1**
(43) Date of publication of application: **28.01.2026**
(21) Application number: 24190770.8
(22) Date of filing: 25.07.2024
(51) Int. Cl.: H02J 3/14, H02J 1/14, H02J 4/00, C25B 1/04, C25B 15/02

(54) **POWER PLANT HAVING ELECTROLYZERS WITH INSTANTANEOUS RESERVE**

(71) Applicant: Siemens Energy Global GmbH & Co. KG, 81739 München (DE)
(72) Inventor: Loku, Fisnik, 90439 Nürnberg (DE); Schumann, Sven, 91452 Wilhermsdorf (DE); Bendig, Marvin, 90513 Zirndorf (DE)

(57) **Abstract**

A power system (100) includes a bus (104) connected to an energy source (102) to transfer an alternating current electrical power from the energy source (102), a transformer unit (112) connected to the bus (104) to transform the alternating current electrical power from a voltage input to a voltage output, a rectifier unit (114) connected to the transformer unit (112) to convert the alternating current electrical power to a direct current electrical power, an electrical load (120) connected to the rectifier unit (114) to consume the direct current electrical power, a DC current control circuit (206) connected to the rectifier unit (114) to determine a firing pulse to the rectifier unit (114) to control the direct current electrical power provided to the electrical load (120), and an energy source data connection (210) connecting the DC current control circuit (206) to the energy source (102) to directly transmit an active power data from the energy source (102) to the DC current control circuit (206) to determine the firing pulse.

## Description

### BACKGROUND

Electrolyzers are used to store surplus renewable energy in the form of hydrogen gas, which can be converted into the power during periods of high demand or low renewable generation. The number of installed electrolyzers in the existing transmission networks continuously increases. In order to accelerate the hydrogen production, the capacity of the electrolyzers may achieve gigawatt range. On the other hand, the conventional energy sources, such as thermal power plants, are continuously replaced by renewable energy sources. Most renewable energy sources may consist of inverter-based systems that convert direct current (DC) electricity generated by the renewable energy sources into alternating current (AC) electricity that is used in electrical grid networks. Certain requirements regarding connection of large electrolyzers in existing networks are defined, for example, requirements of instantaneous reserve.

Instantaneous reserve describes the intrinsic and undelayed power reserve of rotating masses of conventional energy sources synchronously connected to the grid. However, achieving the instantaneous reserve is a challenge for renewable energy sources or energy storage systems which lack large rotating masses.

### BRIEF SUMMARY

In one aspect, a power system is provided. The power system is fed an alternating current (AC) electrical power from a grid. The alternating current electrical power is provided by an energy source. The power system includes a bus connected to the energy source and operable to transfer the alternating current electrical power from the energy source, a transformer unit connected to the bus and operable to transform the alternating current electrical power from a voltage input to a voltage output, a rectifier unit connected to the transformer unit at an AC side and operable to convert the alternating current electrical power to a direct current (DC) electrical power, an electrical load connected to the rectifier unit at a DC side and operable to consume the direct current electrical power, a DC current control circuit connected to the rectifier unit and operable to determine a firing pulse to the rectifier unit to control the direct current electrical power provided to the electrical load, and an energy source data connection connecting the DC current control circuit to the energy source to directly transmit an active power data of the grid from the energy source to the DC current control circuit to determine the firing pulse.

In one aspect, a method of operating a power system is provided. The power system is fed an alternating current (AC) electrical power from a grid. The alternating current electrical power is provided by an energy source. The method includes transferring an alternating current electrical power from an energy source, transforming the alternating current electrical power from a voltage input to a voltage output by a transformer unit, converting the alternating current electrical power to a direct current (DC) electrical power by a rectifier unit, the rectifier unit includes an AC side connected to the transformer unit, operating an electrical load to consume the direct current electrical power, the electrical load connected to the rectifier unit at a DC side, determining a firing pulse to the rectifier unit by a DC current control circuit to control the direct current electrical power provided to the electrical load by the rectifier unit, and directly transmitting an active power data of the grid from the energy source to the DC current control circuit by an energy source data connection to determine the firing pulse.

### BRIEF DESCRIPTION OF THE DRAWINGS

To easily identify the discussion of any particular element or act, the most significant digit or digits in a reference number refer to the figure number in which that element is first introduced.
FIG. 1 illustrates a schematic diagram of a power system having electrical loads.
FIG. 2 illustrates a schematic simplified diagram of the power system of FIG. 1.
FIG. 3 illustrates a chart of a droop control of the power system of FIG. 1.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including", "having", and "comprising", as well as derivatives thereof, mean inclusion without limitation. The singular forms "a", "an", and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith" as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

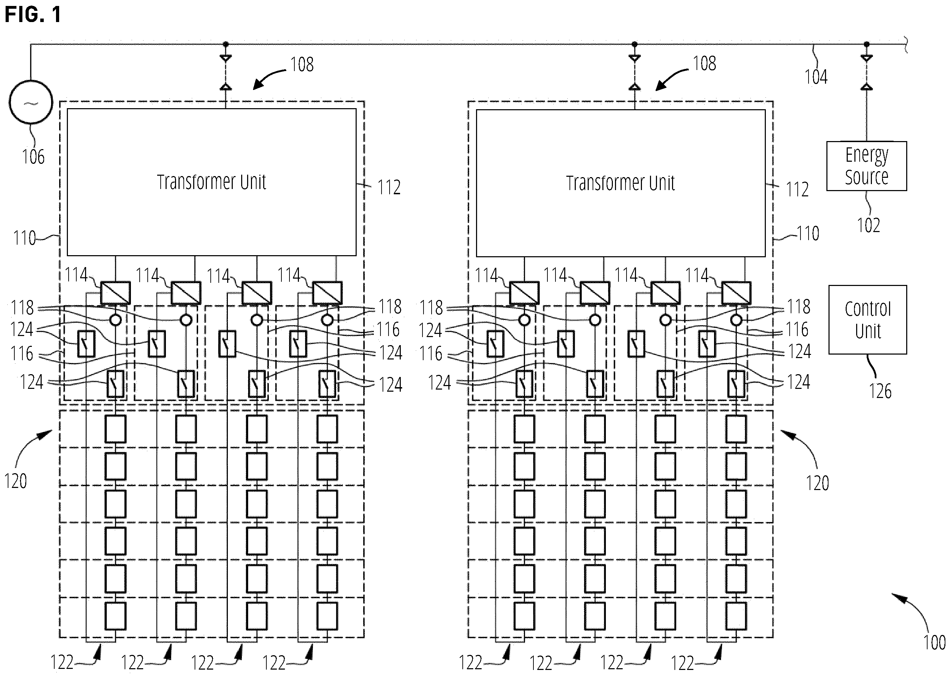

FIG. 1 illustrates a schematic diagram of a power system 100. The power system 100 includes an energy source 102 that is connected to a bus 104 for providing alternating current (AC) electrical power or direct current (DC) electrical power to a grid 106, The energy source 102 may be a conventional power system, such as steam turbine or gas turbine, or renewable energy source, such as wind power, solar power, hydropower, geothermal energy, bioenergy, etc. The energy source 102 may be an energy storage system that stores the electrical energy from the grid 106 and releases the stored electrical energy back to the grid 106. The energy source 102 may be in a grid-following mode that synchronizes with an existing grid 106 or a grid-forming mode that operates independently and establishes conditions of the grid 106 . The grid 106 may be a public grid or a private grid.

The power system 100 includes a plurality of arrays 108 that are connected to the grid 106 through the bus 104. In the embodiment illustrated in FIG. 1, two arrays 108 are connected to the grid 106. In other embodiments, any numbers of arrays 108 may be connected to the grid 106 as desired, such as three arrays 108, six arrays 108, ten arrays 108, twenty arrays 108, or forty arrays 108, etc.

Each array 108 includes a power supply unit 110 that is connected to the bus 104. The power supply unit 110 includes a transformer unit 112 that transfers the AC electrical power from a voltage input provided by the bus 104 to a desired voltage output.

The power supply unit 110 also includes a plurality of rectifier units 114 that are connected to the transformer unit 112. The plurality of rectifier units 114 may be insulated-gate bipolar transistor (IGBT)-based rectifier units 114, or thristor-based rectifier units 114, or any other types of rectifier units 114 as desired. The plurality of rectifier units 114 convert the AC electrical power received from the transformer unit 112 to direct current (DC) electrical power. In the embodiment illustrated in FIG. 1, four rectifier units 114 are connected to the transformer unit 112. In other embodiments, any numbers of rectifier units 114 may be connected to a proper transformer unit 112 as desired. Each rectifier unit 114 is connected to a respective switching unit 116 at the DC side. The switching unit 116 has a current measurement device 118 for measuring a DC current output of the respective rectifier unit 114. The DC current output of each rectifier unit 114 is regulated by firing pulses of the rectifier unit 114.

Each array 108 includes an electrical load 120 that is connected to the power supply unit 110 to consume the direct current electrical power provided. In the embodiment illustrated in FIG. 1, the electrical load 120 includes four electrolyzers 122 that produce hydrogen and oxygen through a process of water electrolysis. In other embodiments, the electrical load 120 may include less or more than four electrolyzers 122 as desired, such as two electrolyzers 122, six electrolyzers 122, ten electrolyzers 122, or twenty electrolyzers 122, etc., or other types of loads or devices as desired. Each electrolyzer 122 is connected to a respective switching element 124 of the switching unit 116 for electrically activating the respective electrolyzer 122.

The power system 100 includes a control unit 126 that controls and monitors the operation of the power system 100. The control unit 126 is operatively connected with a control center of the grid 106 to receive operation data of the grid 106, such as electrical power that is available to the power system 100. The control unit 126 is operatively connected with the energy source 102 for controlling the electrical energy to and from the energy source 102. The control unit 126 is operatively connected with the power supply units 110 for controlling the power supply units 110 to provide desired AC electrical power to the electrolyzers 122 depending on the available electrical power of the grid 106. The control unit 126 is operatively connected with the rectifier units 114 for controlling the rectifier units 114 to provide desired DC electrical power to the electrolyzers 122 depending on the available electrical power of the grid 106. The control unit 126 is operatively connected with the switching units 116 to control the switching state. The control unit 126 is typically a micro-processor based device and includes memory devices, data storage devices, and output devices for collecting, analyzing, storing data, and outputting data.

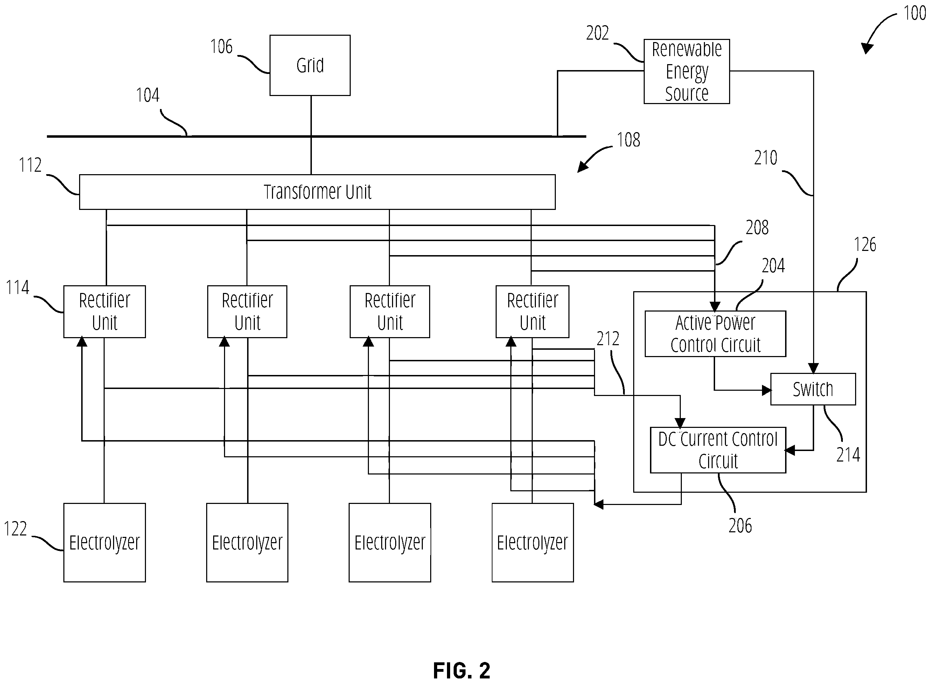

FIG. 2 illustrates a schematic simplified diagram of the power system 100. In the embodiment illustrated in FIG. 2, the power system 100 has one array 108. In other embodiments, the power system 100 may have any numbers of arrays 108 as desired. The energy source 102 of the power system 100 illustrated in FIG. 2 is a renewable energy source 202. The energy source 102 may also be an energy storage system, or any other types of energy sources, such as a conventional power system.

The control unit 126 includes an active power control circuit 204 and a DC current control circuit 206. A grid data connection 208 connects the active power control circuit 204 to each of the rectifier units 114 at the AC site. The grid data connection 208 transmits an active power data that is measured at the AC site of each of the rectifier units 114 to the active power control circuit 204. The active power data includes frequency, voltage, current, etc. The active power control circuit 204 determines a reference DC current from the measured active power data. The active power control circuit 204 is connectable to the DC current control circuit 206 to send the reference DC current to the DC current control circuit 206.

An energy source data connection 210 connects the renewable energy source 202 to the DC current control circuit 206. The energy source data connection 210 transmits the active power data directly from the renewable energy source 202 to the DC current control circuit 206. The DC current control circuit 206 includes a droop control that aligns a parameter of the active power data to the reference DC current.

A DC data connection 212 connects the DC current control circuit 206 to each of the rectifier unit 114 at the DC site. The DC data connection 212 transmits an active DC current that is measured at the DC site of each of the rectifier units 114 to the DC current control circuit 206. The DC current control circuit 206 compares the reference DC current and the active DC current to determine a respective firing pulse to each of the rectifier units 114.

A switch 214 is arranged between the active power control circuit 204 and the DC current control circuit 206 and between the renewable energy source 202 and the DC current control circuit 206. The switch 214 is operable to connect the DC current control circuit 206 with one of the active power control circuit 204 and the renewable energy source 202. In other embodiments, the renewable energy source 202 is directly connected to the DC current control circuit 206 without the switch 214, and the active power control circuit 204 may not be connected to the DC current control circuit 206.

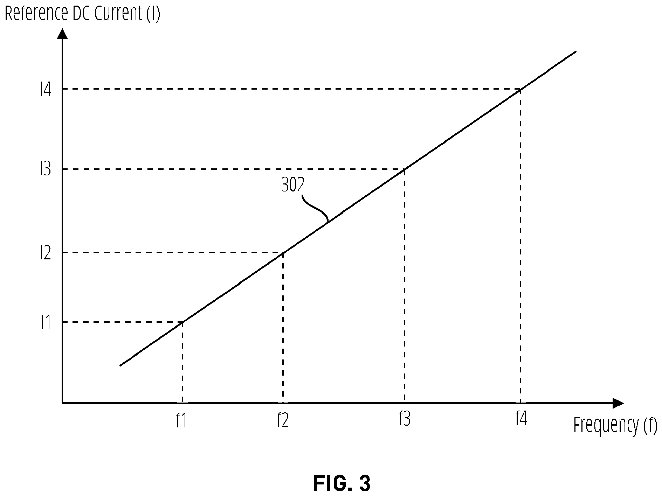

FIG. 3 illustrates a schematic chart 302 of the droop control of the DC current control circuit 206 in the power system 100. The chart 302 illustrates a relationship between the reference DC current I and the frequency f of the active power data.

In the embodiment illustrated in FIG. 3, the droop control has a linear relationship between the reference DC current I and the frequency f. In other embodiments, the droop control may have a nonlinear relationship between the reference DC current I and the frequency f, or a linear or nonlinear relationship between the reference DC current I and one of other active power data, such as voltage, or current, etc.

In operation, the renewable energy source 202 is in the grid forming mode. The switch 214 connects the DC current control circuit 206 with the renewable energy source 202. The energy source data connection 210 directly transmits the active power data from the renewable energy source 202 to the DC current control circuit 206. The DC current control circuit 206 aligns the active power data to a reference DC current according to the chart 302 of the droop control. The DC data connection 212 transmits the measured active DC current to the DC current control circuit 206. The DC current control circuit 206 compares the reference DC current with the measured active DC current to determine the firing pulse to each of the rectifier units 114. The DC current control circuit 206 transmits the firing pulse to the respective rectifier unit 114 to trigger the rectifier unit 114 into conduction.

When the renewable energy source 202 is in the grid following mode during operation, the switch 214 connects the active power control circuit 204 to the DC current control circuit 206. The grid data connection 208 transmits the measured active power data to the active power control circuit 204. The active power control circuit 204 determines the reference DC current from the measured active power data and sends the reference DC current to the DC current control circuit 206. The measured active power data includes frequency, voltage, current, etc. The DC current control circuit 206 compares the reference DC current with the measured active DC current to determine the firing pulse to each of the rectifier units 114. The DC current control circuit 206 then synchronizes the firing pulse with the voltage of the measured active power data and transmits the synchronized firing pulse to the respective rectifier unit 114 to trigger the rectifier unit 114 into conduction.

The proposed power system 100 completely bypasses the active power control circuit 204 during operation when the renewable energy source 202 is in grid forming mode. The DC current control circuit 206 is modified to introduce the droop control between reference DC current and frequency so that the DC current control circuit 206 can alone align the reference DC current with the frequency that is directly received from the renewable energy source 202 instantaneously. The DC current control circuit 206 determines the respective firing pulse to each of the rectifier units 114 based on the reference DC current and the measured active DC current. The control unit 126 sends the firing pulse to each of the rectifier units 114 to trigger the conduction of the rectifier unit 114 to provide the desired DC current to the connected electrolyzer 122.

The proposed power system 100 saves the synchronization time from initially measuring the active power data, then determining the reference DC current from the measured active power data, and then synchronizing the firing pulse with the voltage of the measured active power data. For the IGBT based power technology, the power system 100 can achieve an almost instantaneous reaction, depending on the switching frequency of the electronics, for example, can react in several microseconds range. For the thyristor-based power technology, the power system 100 can achieve an immediate reaction from the first zero crossing point of the voltage input signal to the rectifier units 114, for example, can react in 10 millisecond range.

Achieving the instantaneous reserve is a challenge for renewable energy source 202 or energy storage system which lack large rotating masses. The proposed power system 100 presents that the renewable energy source 202 or the energy storage system is in the grid forming mode and connected to the electrolyzers 122. The droop control of the DC current control circuit 206 instantaneously determines the reference DC current from the active power data that is directly transmitted to the DC current control circuit 206 from the renewable energy source 202. The excellent instantaneous reserve capabilities of the electrolyzers 122 contribute to implement the instantaneous reserve. The proposed power system 100 can thus achieve the requirements of instantaneous reserve for the renewable energy source 202 or energy storage system when connecting with the existing grid 106.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

### LISTING OF DRAWING ELEMENTS

100 power system
102 energy source
104 bus
106 grid
108 array
110 power supply unit
112 transformer unit
114 rectifier unit
116 switching unit
118 current measurement device
120 electrical load
122 electrolyzer
124 switching element
126 control unit
202 renewable energy source
204 active power control circuit
206 DC current control circuit
208 grid data connection
210 energy source data connection
212 DC data connection
214 switch
302 chart

## Claims

1. A power system (100) that is fed an alternating current (AC) electrical power from a grid (106), the alternating current electrical power being provided by an energy source (102), the power system (100) comprising:
a bus (104) connected to the energy source (102) and operable to transfer the alternating current electrical power from the energy source (102);
a transformer unit (112) connected to the bus (104) and operable to transform the alternating current electrical power from a voltage input to a voltage output;
a rectifier unit (114) connected to the transformer unit (112) at an AC side and operable to convert the alternating current electrical power to a direct current (DC) electrical power;
an electrical load (120) connected to the rectifier unit (114) at a DC side and operable to consume the direct current electrical power;
a DC current control circuit (206) connected to the rectifier unit (114) and operable to determine a firing pulse to the rectifier unit (114) to control the direct current electrical power provided to the electrical load (120); and
an energy source data connection (210) connecting the DC current control circuit (206) to the energy source (102) to directly transmit an active power data of the grid (106) from the energy source (102) to the DC current control circuit (206) to determine the firing pulse.

2. The power system (100) of claim 1, wherein the DC current control circuit (206) comprises a droop control to align a reference DC current with the active power data.

3. The power system (100) of claim 2, wherein the droop control comprises a linear relationship between the reference DC current and the active power data.

4. The power system (100) of claim 2, further comprising a DC data connection (212) that transmits an active DC current that is measured at a DC side of the rectifier unit (114) to the DC current control circuit (206), wherein the DC current control circuit (206) is operable to determine the firing pulse by comparing the reference DC current with the active DC current and send the firing pulse to the rectifier unit (114).

5. The power system (100) of claim 1, further comprising an active power control circuit (204) and a grid data connection (208) that connects the active power control circuit (204) to an AC side of the rectifier unit (114), wherein the grid data connection (208) is operable to transmit the active power data that is measured at the AC side to the active power control circuit (204), and wherein the active power control circuit (204) is operable to determine a reference DC current from the measured active power data.

6. The power system (100) of claim 5, further comprising a switch (214) that is operable to connect the DC current control circuit (206) with one of the energy source (102) and the active power control circuit (204).

7. The power system (100) of claim 6, wherein the DC current control circuit (206) is connected with the energy source (102) when the energy source (102) is in a grid forming mode.

8. The power system (100) of claim 6, wherein the DC current control circuit (206) is connected with the active power control circuit (204) when the energy source (102) is in a grid following mode, and wherein the DC current control circuit (206) is operable to determine the firing pulse by comparing the reference DC current with the measured active DC current and synchronize the firing pulse with the measured active power data and send the synchronized firing pulse to the rectifier unit (114).

9. The power system (100) of claim 1, wherein the active power data comprises frequency, and/or voltage, and/or current.

10. The power system (100) of claim 1, wherein the electrical load (120) comprises an electrolyzer (122).

11. A method of operating a power system (100) according to any one of the preceding claims, the power system (100) being fed an alternating current (AC) electrical power from a grid (106), the alternating current electrical power being provided by an energy source (102), the method comprising:
transferring an alternating current electrical power from an energy source (102);
transforming the alternating current electrical power from a voltage input to a voltage output by a transformer unit (112);
converting the alternating current electrical power to a direct current (DC) electrical power by a rectifier unit (114), the rectifier unit (114) comprising an AC side connected to the transformer unit (112);
operating an electrical load (120) to consume the direct current electrical power, the electrical load (120) connected to the rectifier unit (114) at a DC side;
determining a firing pulse to the rectifier unit (114) by a DC current control circuit (206) to control the direct current electrical power provided to the electrical load (120) by the rectifier unit (114); and
directly transmitting an active power data of the grid (106) from the energy source (102) to the DC current control circuit (206) by an energy source data connection (210) to determine the firing pulse.

12. The method of claim 11, further comprising aligning a reference DC current with the active power data by the DC current control circuit (206) using a droop control.

13. The method of claim 12, further comprising comparing the reference DC current with an active DC current that is measured at a DC side of the rectifier unit (114) to determine the firing pulse and sending the firing pulse to the rectifier unit (114).

14. The method of claim 11, further comprising measuring the active power data at an AC side of the rectifier unit (114), transmitting the measured active power data to an active power control circuit (204), determining a reference DC current from the measured active power data by the active power control circuit (204), comparing the reference DC current with an active DC current that is measured at a DC side of the rectifier unit (114) to determine the firing pulse, synchronizing the firing pulse with the measured active power data, and sending the synchronized firing pulse to the rectifier unit (114).

15. The method of claim 14, further comprising connecting the DC current control circuit (206) with the energy source (102) when the energy source (102) is in a grid forming mode and connecting the DC current control circuit (206) with the active power control circuit (204) when the energy source (102) is in a grid following mode.
